Europäisches Patentamt

European Patent Office

Office européen des brevets

(19)

(11) Numéro de publication : **0 174 306**
**B1**

(12) **FASCICULE DE BREVET EUROPÉEN**

(45) Date de publication du fascicule du brevet :
30.09.87

(21) Numéro de dépôt : **84901316.4**

(22) Date de dépôt : **03.04.84**

(86) Numéro de dépôt international :
**PCT/CH 84/00054**

(87) Numéro de publication internationale :
**WO/8500771 (28.02.85 Gazette 85/05)**

(51) Int. Cl.⁴ : **B 23 B 47/28**, B 23 Q 1/00

(54) OUTILLAGE DE FIXATION ET DE GUIDAGE POUR PIECES RONDES.

(30) Priorité : **05.03.84 CH 1065/84**

(43) Date de publication de la demande :
**19.03.86 Bulletin 86/12**

(45) Mention de la délivrance du brevet :
**30.09.87 Bulletin 87/40**

(84) Etats contractants désignés :
**AT BE DE FR GB NL SE**

(56) Documents cités :
**FR-A- 2 296 487**
**GB-A- 326 021**
**GB-A- 590 005**
**US-A- 2 823 564**

(73) Titulaire : **Perret-Gentil, Gaston**
**13, rue Gautier**
**CH-1201 Geneve (CH)**

(72) Inventeur : **Perret-Gentil, Gaston**
**13, rue Gautier**
**CH-1201 Geneve (CH)**

EP 0 174 306 B1

## Description

On connaît des dispositifs de serrage agencés comme outillages de fixation, de blocage et/ou de guidage pour pièces rondes qui peuvent être constitués par des moyens de maintien réglables portés par la base et s'appuyant sur la partie supérieure de la pièce à serrer. Ces outillages, comme celui décrit dans le document GB-A-326 021, ont les désavantages suivants :

1. De ne pas permettre la fixation de petits diamètres de pièces par suite de contact préalable des moyens de maintien sur les faces d'appui avant qu'ils ne puissent toucher la partie supérieure de ces petites pièces.

2. Un moyen de maintien recouvrant la partie supérieure de la pièce à serrer ne permet pas de la rendre accessible sur toute sa longueur.

Le but de l'invention est de pallier ces inconvénients. A cet effet, un dispositif de serrage est agencé tel que défini par la revendication 1.

Une forme d'exécution du dispositif objet de la présente invention sera décrite à titre d'exemple au dessin annexé, dans lequel :

la figure 1 est une coupe axiale, et

la figure 2 une vue en plan de dessus d'un outillage de fixation pour pièces rondes,

la figure 3 une coupe axiale, et

la figure 4 une vue en plan de dessous d'un outillage de blocage et de guidage pour pièces rondes.

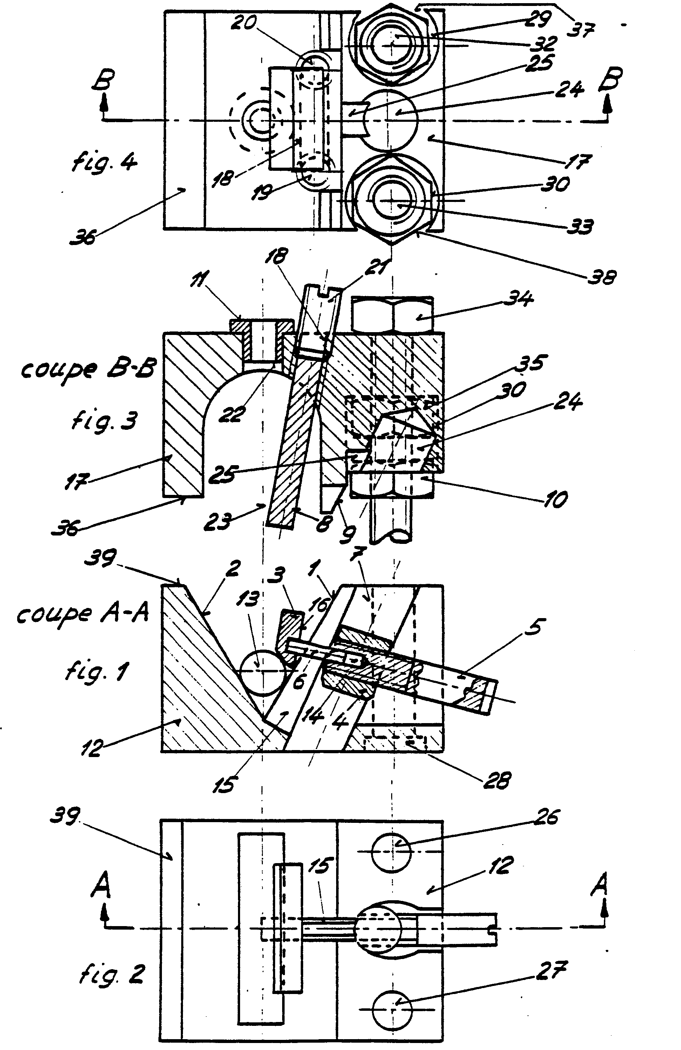

Le dispositif sera décrit d'abord sans référence au dispositif auxiliaire d'appui. Le dispositif de serrage comprend une base 12 (fig. 1) munie de deux plans inclinés 1 et 2 portant la pièce à serrer 13, et d'une ouverture-guide cylindrique 7 dans laquelle coulisse l'écrou 4 pivoté avec un jeu sensible. L'écrou 4 est assemblé avec une broche filetée 5 (vis de serrage 5) possédant une extrémité sphérique pouvant s'appuyer sur la paroi de l'ouverture-guide 7 la plus proche du plan 1 (fig. 1 et 2). La broche filetée 5 porte un bras 6 qui coulisse librement dans un cylindre 14 ménagé dans l'axe de la broche filetée 5. Le groupe formé par le bras 6 et le bloc de serrage 3 qui lui est solidaire passe par le dégagement 15 pratiqué dans la base 12 entre son bord supérieur et une partie ouverte sur toute la hauteur de la surface du plan incliné 1 correspondant (fig. 1 et 2). D'autre part, deux trous de passage traversant 26 et 27 muni chacun d'une noyure telle que 28 sont pratiqués dans le corps de la base 12. La fixation de la pièce (fig. 1) se réalise par le coulissement et le basculement du bras 6 qui amène le bloc 3 qu'il porte en contact avec la pièce qui se trouve maintenue entre ses deux faces d'appui sur les plans inclinés 1 et 2 et l'extrémité inclinée du bloc 3.

Le fonctionnement est le suivant : lorsqu'on veut immobiliser une pièce ronde telle que 13 mais pouvant avoir également un diamètre plus petit ou plus grand inscriptible dans le triangle formé par la section complète délimitée par les plans inclinés 1 et 2 à l'intérieur de la base 12, une telle immobilisation étant souhaitée pour des opérations telles que pointage, perçage, fraisage, meulage, contrôle de la surface ou de l'intérieur des pièces, on imprime un mouvement de rotation à droite de la vis 5 munie d'un filet à droite, ce mouvement fait avancer la vis 5 en direction du plan incliné 1 étant donné que l'écrou 4 ne peut pas tourner sur lui-même. Avant ce mouvement de la vis 5 en direction du dégagement 15, l'écrou 4 qui porte cette vis a son axe sensiblement confondu avec celui de l'ouverture 7, dans cette position non représentée, le bloc 3, s'appuyant sur la pièce 13, a sa face 16 formant un angle plus petit avec le plan 1 que dans la position représentée. Dès que par rotation de la vis 5, l'extrémité sphérique de l'écrou 4 entre en contact avec la surface latérale de l'ouverture-guide 7 (fig. 1), la surface latérale de l'écrou 4 ne coïncide plus avec celle de l'ouverture 7 mais occupe la position oblique représentée provoquant le basculement du bras 6 portant le bloc 3 qui applique la pièce 13 entre les plans 1 et 2 et sa face de contact avec la pièce ; le bloc 3 glissant de surcroît le long du plan 1 avec déplacement de son bras dans le cylindre 14. La pièce 13 est alors immobilisée. Pour desserrer la pièce 13, il suffit de tourner la vis 5 en sens inverse. Pour serrer une pièce de grandeur différente, on déplace et met en contact légèrement le bloc de serrage 3 contre la pièce le long de son plan d'appui en faisant coulisser l'écrou 4 dans l'ouverture 7 puis on procède de la même manière que dans l'exemple décrit avec la pièce 13. La pièce à immobiliser pourrait également être conique ; dans ce cas l'appui du bloc 3 contre la surface conique s'accompagne d'une rotation du bloc 3 et de son bras 6 autour de son axe.

Pour des raisons pratiques on peut également prévoir des butées de positionnement longitudinales non représentées pour des opérations de série sur des pièces semblables ou encore d'insérer deux plaques d'appui parallèles, de même épaisseur entre les plans 1 et 2 et la pièce à immobiliser pour ménager un espace supplémentaire au-dessous de la pièce pour des perçages débouchant de grand diamètre à réaliser dans cette pièce.

Lorsqu'un serrage supplémentaire s'impose, par exemple pour des perçages répétitifs par canon de guidage, on a la possibilité de monter sur la base 12 de l'outillage un dispositif d'appui (fig. 3 et fig. 4) dont une forme d'exécution sera également décrite à titre d'exemple. Le dispositif d'appui comprend un support 17 dans lequel on a ménagé une glissière inclinée 18 possédant à ses deux extrémités deux trous filetés 19 et 20 de diamètre plus grand que la largeur de cette glissière et débouchant par leurs parties latérales à l'intérieur de la glissière. Cette glissière portant un élément d'appui 8 dont les bords sont contigus aux deux extrémités de ces deux trous filetés débouchant des deux côtés du support 17 (fig. 3 et fig. 4). Les trous filetés 19 et 20 sont munis de deux vis d'appui telles que la vis 21. Sur un axe vertical 23 du support 17 est pratiqué un trou 22 dans lequel on a monté un canon de guidage 11. L'angle compris entre l'axe d'inclinaison de la glissière 18 et celui de l'axe 23 est sensiblement le même que l'angle que forme la face 16 du bloc 3 (fig. 1) avec ce même axe. Dans la partie inférieure du support 17 il est pratiqué un évidement incliné 24 (fig. 3 et fig. 4) dont l'angle d'inclinaison est sensiblement égal à celui que fait l'ouverture-guide 7 avec l'axe 23 (fig. 1). Dans le prolongement de l'évidement 24 un espace creux 25 est ménagé dans le corps du support 17 (fig. 3 et fig. 4).

Aux deux extrémités du support 17 il est pratiqué au travers du corps de ce support deux trous d'assemblage munis de deux noyures 29 et 30 identiques (fig. 3 et fig. 4), dans ces trous sont montés deux boulons 32 et 33 tels que 34, ces boulons étant porteurs de deux écrous d'assujettissement au support tels que 35 et de deux écrous de réglage tels que 10.

L'assemblage de la base 12 avec le support 17 (fig. 1 et fig. 3) se fait de la manière suivante : on vérifie que les deux écrous de réglage 10 ont leur plan d'appui inférieur au même niveau que le plan de contact 36 du support 17 (fig. 3). Si tel n'est pas le cas, on visse ou on dévisse les écrous de réglage par l'intermédiaire d'encoches ou de trous d'entraînement, non représentés, dans la surface latérale de ces écrous et accessibles par les fenêtres 37 et 38 pratiqués dans le support 17 sur la hauteur des noyures 29 et 30.

La mise de niveau des écrous 10 étant réalisée, on introduit les tiges filetées des boulons 32 et 33 (fig. 3 et fig. 4) à l'intérieur des deux trous de passage 26 et 27 de la base 12 (fig. 2 et fig. 3) jusqu'au contact entre les plans 36 et 39 avec simultanément la coïncidence de la surface inclinée 9 avec le plan 1. Dans cette position l'axe 23 est commun au canon 11 et à la pièce 13 (fig. 1 et 3). On vérifie alors que l'élément d'appui 8 ne touche pas encore la partie supérieure du bloc 3.

On assemble ensuite rigidement le support 17 avec la base 12 en serrant des contre-écrous non représentés logés dans les noyures 28. On appuie ensuite l'élément 8 contre le bloc 3, plus ou moins fort selon les conditions demandées, par l'intermédiaire des deux vis 21 ; la largeur de cet élément ayant été prévue suffisamment grande pour être en mesure d'appuyer le bloc de serrage 3 dans toutes les conditions d'utilisation prévues de l'outillage. L'évidement 24 est destiné au libre passage de l'écrou coulissant 4 et l'espace creux 25 à celui du passage du bras 6.

Le dispositif de serrage pour pièces rondes ayant donc été complété par l'addition du dispositif d'appui, on peut glisser l'ensemble par la base 12 sur une table de travail de façon à placer, par exemple, l'axe 23 du canon dans l'axe d'un outil qui doit effectuer les opérations mécaniques, en maintenant l'ensemble soit à la main, soit en le bridant sur la table de travail par des pattes de serrage non représentées pratiquées dans la base 12 ; ou alors introduire les deux tiges filetées des boulons 32 et 33 à travers des rainures ou des trous de passages existants sur la table de travail et serrer l'ensemble sur cette table par l'intermédiaire de rondelles et d'écrous d'appui, non représentés, montés à l'extrémité de ces tiges filetées et se serrant au-dessous de la table de travail.

## Revendications

1. Dispositif de serrage pour pièces rondes comportant une base (12) présentant des plans adjacents inclinés (1, 2) délimitant une rainure en V et des moyens de maintien (3, 6) portés par la base et réglables pour retenir la pièce ronde (13) d'une largeur quelconque dans la rainure en V pendant des opérations mécaniques, caractérisé en ce que les moyens de maintien (3, 4, 5, 6, 8) comportent un bloc de serrage (3) disposé dans la rainure en V solidaire d'un bras (6) passant à travers l'un des plans inclinés (1) par un dégagement (15) pour être reçu à l'intérieur de la base (12) coulissant en direction axiale par des moyens de blocage (4, 5) permettant un réglage de l'élévation et de l'orientation du bloc de serrage (3) dans la rainure en V afin d'enfoncer le bloc de serrage entre la pièce ronde et un des plans inclinés de la rainure en V.

2. Dispositif de serrage selon la revendication 1, caractérisé en ce que les moyens de blocage comprennent un écrou (4) coulissant dans une ouverture-guide (7) pratiquée dans la base (12) pour assurer le réglage du bloc, l'écrou étant engagé sur une broche filetée (5) où coulisse le bras (6) solidaire du bloc de serrage (3).

3. Dispositif de serrage selon la revendication 2, caractérisé en ce que le serrage de la broche filetée (5) entraîne l'écrou (4) en coopération avec une paroi correspondante de l'ouverture-guide (7) afin de provoquer un basculement de l'écrou (4), du bras (6) et du bloc de serrage (3) contre la surface latérale de la pièce à fixer.

4. Dispositif de serrage selon la revendication 1, caractérisé en ce qu'un dispositif d'appui (8, 17, 21) butte contre le bloc de serrage (3) afin de le maintenir contre la pièce (13) pour l'immobiliser lors d'opérations créant une forte contrainte.

5. Dispositif de serrage selon la revendication 4, caractérisé en ce que l'emplacement du dispositif d'appui sur la base (12) de l'outillage est obtenu par glissement entre au moins une surface de contact (9) de son support (17) avec une surface du plan incliné (1).

6. Dispositif de serrage selon la revendication 5, caractérisé en ce que le positionnement correct pour l'emplacement se fait au moyen d'au moins un écrou de réglage (10).

## Claims

1. Clamping device for round parts, being made up of a base (12), having adjacent inclined planes (1, 2) demarkating a V-shaped groove, and retention devices (3, 6), supported by the base, which can be adjusted in order to hold in the V-shaped groove round part (13) of any diameter during mechanical operations, characterized by its retention devices (3, 4, 5, 6, 8) which consist of a set-up block (3) laid in the V-shaped groove which act in conjuction which an arm (6) passing through a clearance slot (15) in one of the inclined planes (1) of the groove to end up inside the base (12) to slide in an axial direction by means of the locking device (4, 5), which allows adjustment of the height and orientation of the set-up block (3) in the V-shaped groove in order to ram down in the set-up block between the round part and one of the inclined planes of the V-shaped groove.

2. Clamping device as in claim 1, characterized by the fact that the locking device consists of a nut (4) sliding in an opening guide (7) made in the base (12) in order to ensure adjustment of the block, the nut is fitted onto a threaded spindle (5) where the arm (6), which functions with the set-up block (3), slides.

3. Clamping device as in claim 2, characterized by the fact that the clamping of the threaded spindle (5) drives the nut (4) into working together with the corresponding side of the opening guide (7) in order to induce the nut (4), the arm (6) and the set-up block (3) to flip over against the side surface of the parts to be clamped.

4. Clamping device as in claim 1, characterized by the fact that a support device (8, 17, 21) abuts against the set-up block (3) in order to hold it in place against the part (13), thus immobilizing the latter during operations which create a heavy strain.

5. Clamping device as in claim 4, characterized by the fact that the location of the support device on the base (12) of the tooling is obtained by sliding between at least one contact surface (9) of its support (17) and a surface of the inclined plane (1).

6. Clamping device as in claim 5, characterized by the fact that the correct positioning for the location of the support device is made by means of at least one adjustment nut (10).

**Patentansprüche**

1. Spannvorrichtung für runde Teile, die einen Sockel (12) mit angrenzenden schiefen Flächen (1, 2), ein Prisma bildend und eine von diesem Sockel getragene, einstellbare Haltevorrichtung (3, 6) unfasst, die ein rundes Teil (13) von beliebiger Breite während mechanischer Vorgänge im Prisma festhält, gekennzeichnet dadurch, dass die Haltevorrichtung (3, 4, 5, 6, 8) sie eine im Prisma gelagerte Spannunterte (3) enthält, die mittels einer, durch eine der schiefen Flächen (1) gehende Nut (15) mit einem Arm (6) verbunden ist, der im Sockel (12) aufgenommen wird und axial durch die Lagensicherungsmittel (4, 5) verstellbar ist, was eine Einstellung in der Höhe und die Drehung der Spannunterlage (3) im Prisma erlaubt, so kann die Spannunterlage zwischen den runden Teil und einer schiefen Fläche des Prismas eingetrieben werden.

2. Spannvorrichtung gemäss Anspruch 1, gekennzeichnet dadurch, dass die Spannmittel aus einer, in einer Führungsnut (7) des Sockels (12) verstellbaren Mutter (4) die die Einstellung der Unterlage erlaubt, bestehen. Die Mutter ist auf einer Gewindespindel (5) montiert, in welcher der, mit der Spannunterlage (3) verbundene Arm (6) sich verschiebt.

3. Spannvorrichtung gemäss Anspruch 2, gekennzeichnet dadurch, dass das Spannen der Gewindespindel (5) mit Hilfe einer entsprechenden Seite der Führungsnut (7) die Mutter (4) mitzieht, um ein Kippen der Mutter (4), des Arms (6) und der Spannunterlage (3) gegen das zu spannende Teil zu bewirken.

4. Spannvorrichtung gemäss Anspruch 1, gekennzeichnet dadurch, dass eine Stützvorrichtung (8, 17, 21) an die Spannunterlage (3) anstösst um das Teil (13) bei Vorgängen mit starken Beanspruchungen festzuhalten.

5. Spannvorrichtung gemäss Anspruch 4, gekennzeichnet dadurch, dass die Lage der Stützvorrichtung auf dem Sockel (12) des Werkzeugs durch das Schieben zwischen mindestens einer Kontaktfläche (9) der Auflage (17) und einer der schiefen Flächen (1) stattfindet.

6. Spannvorrichtung gemäss Anspruch 5, gekennzeichnet dadurch, dass die richtige Einstellung der Lage mittels mindestens einer Stellmutter (10) ausgeführt wird.

fig. 4

coupe B-B

fig. 3

coupe A-A

fig. 1

fig. 2